# EUROPEAN PATENT SPECIFICATION

(11) **EP 4 406 760 B1**
(45) Date of publication and mention of the grant of the patent: **12.08.2026**
(21) Application number: 23219599.0
(22) Date of filing: 22.12.2023
(51) Int. Cl.: B60C 11/00, B60C 11/03, B60C 11/12, B60C 11/13, B60C 13/00, B60C 1/00

(54) **PNEUMATIC TIRE**
LUFTREIFEN
PNEUMATIQUE

(30) Priority: 06.01.2023 JP 2023001017
(43) Date of publication of application: 31.07.2024
(73) Proprietor: Toyo Tire Corporation, Itami-shi, Hyogo 664-0847 (JP)
(72) Inventor: Shinozaki, Shingo, Itami-shi, 664-0847 (JP)
(74) Representative: Müller-Boré & Partner Patentanwälte PartG mbB

(56) References cited:
- JP-S- 1 661 631
- US-S- D 713 328
- US-S- D 844 547
- US-S- D 884 588

## Description

### TECHNICAL FIELD

The present invention relates to a pneumatic tire.

### RELATED ART

Typical tires that are intended to be mainly used on public roads have many longitudinal grooves in order to prioritize drainage, but off-road tires have more lateral grooves to give them more propulsive force for running over rough roads. JP 2019-34727 A discloses an off-road pneumatic tire having a plurality of lateral grooves extending in the substantially axial direction on both sides in the axial direction and provided at substantially equal intervals in the circumferential direction.
US D 713 328 S1, US D 884 588 S1, US D844 547 S1, and JP 1 661631 S show an ornamental design for a tire with repeating pattern uniformly through out a circumference of a tread and both sides of the tire.

### SUMMARY

Since the above tire has a large number of lateral grooves in most of the area except the center in the axial direction, it is possible to obtain propulsive force in running on rough roads (for example, muddy roads). However, the above tire has a problem in which it is difficult to improve soil removal performance in running on rough roads. Therefore, it is an advantage of the present invention to provide a pneumatic tire that can obtain propulsive force for running over rough roads and can also improve soil removal performance in running on rough roads.

According to the pneumatic tire according to the present invention, it is possible to obtain a propulsive force for running over rough roads, and it is also possible to improve soil removal performance in driving on rough roads. The present invention is defined by the independent claim. Preferred examples are defined in the dependent claims.

### BRIEF DESCRIPTION OF THE DRAWINGS

The figures depict one or more implementations in accordance with the present teaching, by way of example only, not by way of limitations. In the figures, like reference numerals refer to the same or similar elements.

Embodiments of the present invention will be described based on the following figures, wherein:
FIG. 1 is a half sectional view including a radial direction and an axial direction of a pneumatic tire according to an embodiment of the present invention;
FIG. 2 is a front view of part of the tire as viewed from an outer side in a radial direction;
FIG. 3 is a perspective view of the tire as viewed from a direction inclined with respect to the radial direction;
FIG. 4 is a partially enlarged front view of FIG. 2; and
FIG. 5 is a schematic plan view in which part of the tire in the circumferential direction is orthogonally projected onto a plane orthogonal to the radial direction of the tire.

### DESCRIPTION OF EMBODIMENT

An embodiment according to the present invention will be described in detail with reference to the accompanying drawings. In the following embodiment, the same components are denoted by the same reference numerals and characters in the drawings, and duplicate explanation will be omitted. Furthermore, a plurality of drawings include schematic diagrams, and the dimensional ratios of individual members, such as length, width, and height, do not necessarily match between different drawings. Furthermore, in the following description, sipes 95 are grooves provided in the ground plane, and has a groove width of 1 mm or less. Furthermore, the present invention is not limited to the following embodiment and modifications thereof, and various improvements and changes can be made within the scope of the claims of the present application and equivalents thereof. For example, it has been envisioned from the beginning that a new embodiment will be constructed by appropriately combining the characteristic parts of the embodiment and modifications described below. Furthermore, among the components described below, components that are not described in the independent claim indicating the most significant concept are optional components and are not essential components.

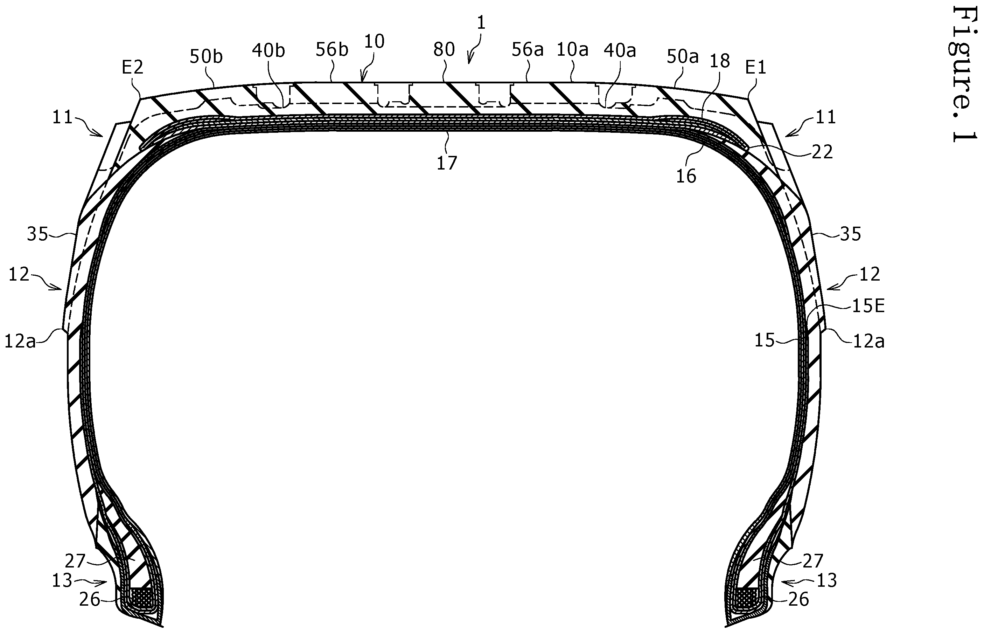

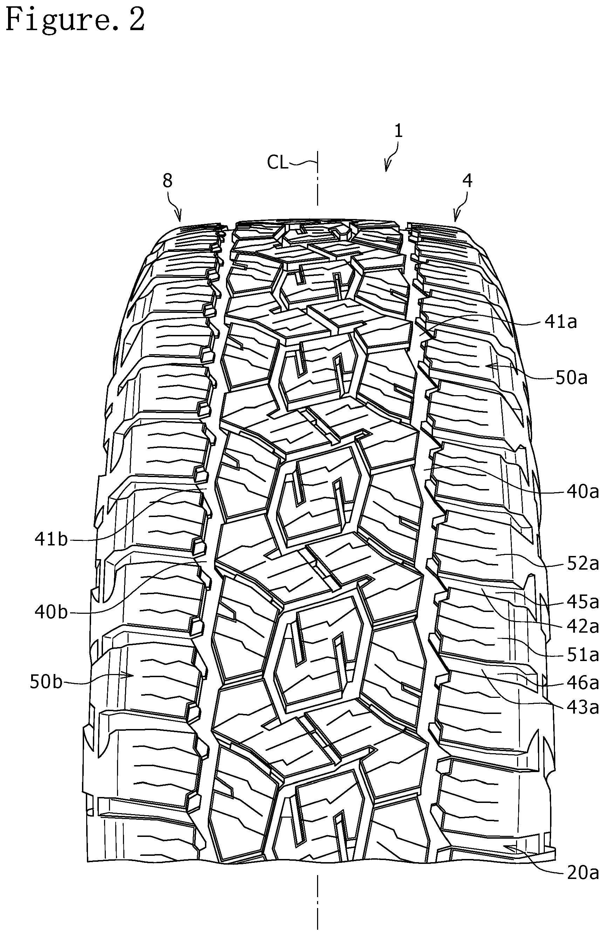

FIG. 1 is a half sectional view including a radial direction and an axial direction of a pneumatic tire 1 according to an embodiment of the present invention. As shown in FIG. 1, a pneumatic tire (hereinafter simply referred to as a tire) 1 includes a tread 10, a pair of shoulders 11, a pair of sidewalls 12, and a pair of beads 13. The tread 10 includes a ground contact surface 10a that is arranged at the center in the axial direction and is in contact with the road surface. The tread 10 is made of, for example, a tread rubber composition made of crosslinked rubber. A plurality of grooves 40a, 40b are provided on the outer circumferential surface of the tread 10. The plurality of grooves 40a, 40b include a plurality of main grooves 40a, 40b extending in a circumferential direction and a plurality of lateral grooves extending in a direction intersecting the main grooves 40a, 40b. The grooves 40a, 40b are provided for the purpose of effectively obtaining propulsive force from drained water, removed soil, and rough roads. The plurality of grooves 40a, 40b define a plurality of blocks 50a, 50b, 56a, 56b, 80. The groove structure and block structure of the tire 1 will be described in detail later using FIGS. 2 to 4.

The shoulders 11, the sidewalls 12, and the beads 13 are parts that form the side surfaces of the tire 1, and are provided on opposite sides of the tire 1 in the axial direction. The shoulders 11, sidewalls 12, and beads 13 extend inward in the radial direction from the opposite end parts in the axial direction of the tread 10. Each shoulder 11 is a shoulder portion of the tire 1, and protrudes outward in the axial direction from the end in the axial direction of the tread 10 and extends inward in the radial direction. Like the tread 10, the shoulder 11 is provided in an annular shape in the circumferential direction. The ground contact ends E1, E2 of the tire 1 may be defined as the boundary positions between the tread 10 and the shoulders 11. Note that the ground contact ends E1 and E2 mean the opposite ends in the axial direction of the part that is in contact with the ground when the tire 1 is mounted on a regular rim, the internal pressure is adjusted to the regular internal pressure, and a regular load is applied (the regular rims, etc. are the same as those in the description in JP 2020-131965 A).

Each sidewall 12 exists on the side surface of the tire and includes a part where the tire 1 most yields. The sidewall 2 bends smoothly and thereby serves to withstand impact and centrifugal force. The sidewall 12 is arranged between the shoulder 11 and the bead 13 and is made of an integral sidewall rubber composition. The sidewall 12 serves to protect the carcass 15 and prevent the carcass 15 from elongation. The sidewall 12 extends inward in the radial direction from the shoulder 11 and is provided in an annular shape in the circumferential direction. The sidewall 12 includes a tire maximum width position 12a that protrudes most outward in the axial direction of the tire 1, and gently curves so as to be convex toward the outside.

Each bead 13 extends inward in the radial direction from the sidewall 12 and is formed in an annular shape in the circumferential direction. The bead 13 is a portion fixed to the rim of the wheel and forms the inner circumferential portion of the tire 1. The bead 13 gently curves so as to be convex inward, and is located on an inner side in the axial direction relative to the sidewall 12.

The beads 13 each include a bead core 26 and a bead filler 27. The bead cores 26 and bead fillers 27 are provided on opposite sides in the axial direction. Each bead core 26 is a ring-shaped member made of bundled steel wires covered with rubber. Furthermore, the bead filler 27 is made of hard rubber and has a function of increasing the rigidity of the bead 13. The bead filler 27 is arranged on the outer side in the radial direction relative to the bead core 26.

The tire 1 includes the carcass 15 that is a cord layer covered with rubber. The carcass 15 is composed of, for example, two layers of carcass ply, and forms a tire skeleton that can withstand loads, impacts, air pressure, and the like. The carcass 15 has a radial structure in which carcass cords are arranged in a direction orthogonal to the circumferential direction. The carcass 15 is covered with a plurality of rubber members such as the above-mentioned tread rubber composition and sidewall rubber composition. The inner liner 17 is a rubber layer for maintaining air pressure, and is attached to the inner peripheral surface of the carcass 15.

The tire 1 includes a belt 16 between the tread 10 and the carcass 15. The belt 16 is a reinforcing band stretched in the circumferential direction, and strongly tightens the carcass 15 to increase the rigidity of the tread 10. The belt 16 has, for example, a two-layer structure in which two steel belts made of steel cords topped with rubber are stacked. However, the number of laminated steel belts is not limited to two, and the steel belts may be replaced to belts containing tire cords made of aramid fibers or the like. Alternatively, the belt may be composed of only one layer. Furthermore, the belt 16 may employ belts containing tire cords made of aramid fibers or the like, instead of the steel belts. Providing the belt 16 can ensure the rigidity of the tire 1 and improve the ground contact between the tread 10 and the road surface.

The tire 1 includes a belt reinforcing material 18 between the belt 16 and the tread 10. The belt reinforcing material 18 has, for example, a two-layer structure and includes two cap plies. Each cap ply is composed of, for example, an insulating organic fiber layer such as polyamide fiber, and is covered with topping rubber. The belt reinforcing material 18 is installed for purposes such as improving durability and reducing road noise during running. Note that the number of laminated cap plies is not limited to two. In the axial direction, the belt reinforcing material 18 is arranged in the entire region that positionally coincides with the tread 10 in the radial direction and in a partial region of the shoulder 11. The axially outer end 22 of the belt reinforcing material 18 extends outward in the axial direction relative to the belt 16.

The carcass ply that forms the carcass 15 is arranged so as to span a pair of bead cores 26. The carcass ply spans each bead core 26 from the inner side in the axial direction, and are folded back toward each sidewall 12 so as to wrap around the bead core 26 and bead filler 27. In the example shown in FIG. 1, a ply end 15E that is an end of the carcass ply is located on the inner side in the axial direction of each sidewall 12. When the carcass 15 includes two layers of carcass ply, the ply end of the other layer of carcass ply is generally located at each bead 13.

The tire 1 is intended for off-road use. At least one of the sidewalls 12 has a side protector 35 on the outer side in the radial direction, and in this embodiment, the sidewalls 12 on the opposite sides in the axial direction each have a side protector 35 on the outer side in the radial direction. Each side protector 35 is a portion of the sidewall 12 that upheaves (protrudes) outward in the axial direction. The side protector 35 prevents damage to the main body caused by foreign objects such as stones flying toward the side of the tire to collide with the main body when the vehicle is running on a rough road.

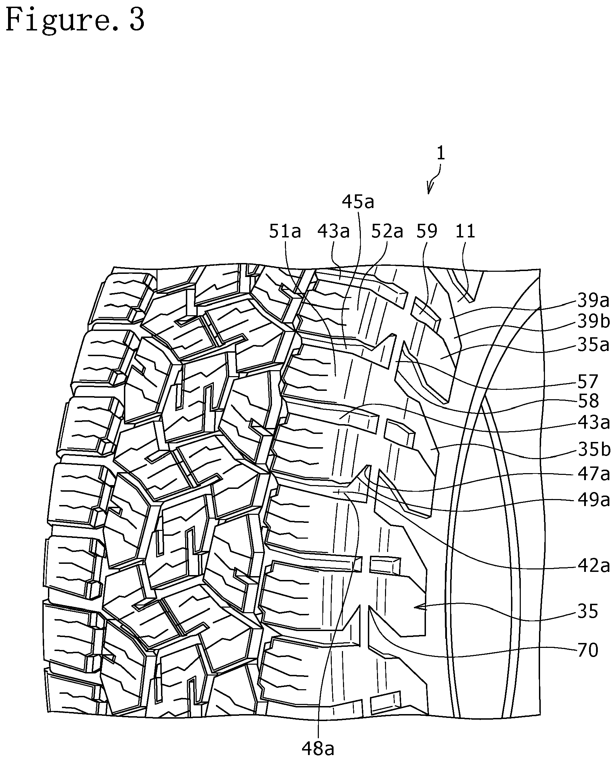

FIG. 2 is a front view of part of the tire 1 as viewed from the outer side in the radial direction, and FIG. 3 is a perspective view of the tire 1 as viewed from a direction inclined with respect to the radial direction. As shown in FIG. 2, the tire 1 has an asymmetric structure with respect to an equator CL, but a first structure 4 located on a first side in the axial direction with respect to the equator CL is the same as a second structure 8 located on a second side in the axial direction. More specifically, if the first structure 4 is reversed by 180 degrees, it corresponds to the second structure 8.

The tire 1 includes: a first main groove 40a that is provided on the first side in the axial direction and includes a first annular portion 41a extending in parallel to the circumferential direction over the entire circumference in the circumferential direction; and a second main groove 40b that is provided on the second side in the axial direction and includes a second annular portion 41b extending in parallel to the circumferential direction over the entire circumference in the circumferential direction. Between the first main groove 40a and the second main groove 40b in the axial direction, the tire 1 has no groove having an annular portion extending in parallel to the circumferential direction over the entire circumference in the circumferential direction.

In other words, when a tire-width-direction cross section is viewed in the circumferential direction, the first main groove 40a has a part through which the front in the extending direction can be seen (so-called see-through part/region) without being blocked by the blocks 50a, 50b, 56a, 56b, 80 (groove wall surface of the first main groove 40a). To explain in more detail, the first main groove 40a extends so as to have a see-through region. The see-through region is a region where blocks are arranged so that the sides of the blocks forming the groove wall do not cross the center line of the width of the groove when the circumferential groove is viewed in the tire circumferential direction for the maximum width of the groove. If the groove extends in a zigzag pattern so that the side surfaces of the blocks forming the groove wall surfaces overlap in the tire width direction, no see-through region exists. Furthermore, when a tire-width-direction cross section is viewed in the circumferential direction, the second main groove 40b has a part through which the front in the extending direction can be seen without being blocked by the blocks 50a, 50b, 56a, 56b, 80 (groove wall surface of the second main groove 40b). In other words, the second main groove 40b also extends so as to have a see-through region. Furthermore, when a tire-width-direction cross section is viewed in the circumferential direction, the tire 1 has no groove including a part through which the front in the extending direction can be seen without being blocked by the blocks 50a, 50b, 56a, 56b, and 80, between the first main groove 40a and the second main groove 40b in the axial direction. In the axial direction, there is no see-through region in any of the grooves existing between the first main groove 40a and the second main groove 40b.

Note that the first side in the axial direction and the second side in the axial direction need not to have the same structure. For example, the average distance in the axial direction from the equator CL to the first main groove may be different from the average distance in the axial direction from the equator CL to the second main groove. Furthermore, the tire may be a directional tire (unidirectional pattern tire), and for example, the side protector may exist only on the outer sidewall in the width direction of the vehicle when the tire is properly mounted on the vehicle.

The tire 1 has a plurality of longitudinal grooves and a plurality of lateral grooves. In this specification, a longitudinal groove is defined as a groove having a part with a maximum inclination angle with respect to the circumferential direction of 45° or less and partially provided in the circumferential direction. Furthermore, a lateral groove is defined as a groove having a maximum inclination angle with respect to the axial direction of less than 45° and partially provided in the circumferential direction. The main grooves 40a, 40b, the plurality of longitudinal grooves, and the plurality of lateral grooves define a plurality of blocks 50a, 50b, 56a, 56b, 80. The tire 1 has a plurality of shoulder blocks 50a arranged in the circumferential direction along the end part in the axial direction of the first side, and a plurality of shoulder blocks 50b arranged in the circumferential direction along the end part in the axial direction of the second side.

First, the following describes the structure of the first main groove 40a and the plurality of shoulder blocks 50a. Since the first structure 4 is the same as the second structure 8, description of the structure of the second main groove 40b and the shoulder blocks 50b will be omitted. As shown in FIG. 3, the plurality of shoulder blocks 50a has a plurality of first side first shoulder blocks 51a and a plurality of first side second shoulder blocks 52a. The first side first shoulder blocks 51a and the first side second shoulder blocks 52a are arranged alternately in the circumferential direction. Note that the plurality of shoulder blocks arranged on each side in the axial direction may be composed of a plurality of identical shoulder blocks only, or may include three or more different shoulder blocks.

The outer edge in the axial direction of the first main groove 40a is defined by the plurality of first side first shoulder blocks 51a and the plurality of first side second shoulder blocks 52a. The plurality of first side first shoulder blocks 51a and the plurality of first side second shoulder blocks 52a are arranged alternately in the circumferential direction. Each first side first shoulder block 51a has a different structure from the respective first side second shoulder blocks 52a. First lateral grooves 20a are composed of a plurality of first side first lateral grooves 42a and a plurality of first side second lateral grooves 43a. The plurality of first side first lateral grooves 42a and the plurality of first side second lateral grooves 43a are arranged alternately in the circumferential direction. Each of the first side first lateral grooves 42a and the first side second lateral grooves 43a is arranged between the first side first shoulder block 51a and the first side second shoulder block 52a in the circumferential direction. The first side first lateral groove 42a has a different structure from the first side second lateral groove 43a.

Each first side first lateral groove 42a exists between the first side first shoulder block 51a and the first side second shoulder block 52a adjacent thereto on the first side in the circumferential direction (corresponding to the vertically upper side of the paper in Figure 2). Each first side second lateral groove 43a exists between the first side second shoulder block 52a and the first side first shoulder block 51a adjacent thereto on the first side in the circumferential direction. The plurality of first side first lateral grooves 42a and the plurality of first side second lateral grooves 43a compose a plurality of first lateral grooves 20a. Each of the first side first lateral grooves 42a and first side second lateral grooves 43a communicates with the first main groove 40a and extends from the first main groove 40a to a first side region in the axial direction.

As shown in FIG. 2, the respective first side first lateral grooves 42a and first side second lateral groove 43a forms an acute angle with respect to the axial direction and extends in a direction inclined toward a second side in the circumferential direction (lower side in the vertical direction of the paper). The first side first lateral groove 42a has a groove width expansion portion 45a in which the groove width increases as progress toward the outer side in the axial direction. Furthermore, the first side second lateral groove 43a also has a groove width expansion portion 46a in which the groove width increases as progress toward the outer side in the axial direction. **In** the perspective view shown in FIG. 3, the first side first lateral groove 42a has a substantially L-shape, has a triangular circumferential protrusion 47a that protrudes toward the first side in the circumferential direction in the end part on the first side in the axial direction, and has an opening having a larger width in the circumferential direction on the first side in the axial direction.

The groove width expansion portion 45a of the first side first lateral groove 42a has a two-step structure. The groove width expansion portion 45a of the first side first lateral groove 42a includes: an axially inner portion 48a in which a maximum groove width expansion rate per unit length in the axial direction is a first groove width expansion rate; and an axially outer portion 49a, extending outward in the axial direction from the axially inner portion 48a, in which a minimum groove width expansion rate per unit length in the axial direction is a second groove width expansion rate that is larger than the first groove width expansion rate. In contrast, the first side second lateral groove 43a has a one-step structure in which the groove width expansion portion 46a of the first side second lateral groove 43a gradually increases in groove width as progress toward the axially outer end.

As shown in FIG. 3, the tire 1 has a plurality of side protectors 35 arranged on the sidewall 12 at intervals in the circumferential direction. Each side protector 35 includes a first portion 35a that is connected to the first side second shoulder block 52a and extends inward in the radial direction, and a second portion 35b that is connected to the first side first shoulder block 51a and extends inward in the radial direction. As shown in FIG. 3, the first portion 35a has a triangular depression 70 in an end part on the outer side in the radial direction and on the second side in the circumferential direction. As a result, a first recess 58 defined by the second side in the circumferential direction of the first portion 35a, the first side in the circumferential direction of the second portion 35b, and the annular rib 57 extending in the circumferential direction has a larger width in the circumferential direction in the outer region in the radial direction. The first recess 58 has an inner end in the radial direction that opens inward in the radial direction.

The groove width expansion portion 45a of the first side first lateral groove 42a has a width in the circumferential direction at the axially outer end, which the width is substantially equal to the width in the circumferential direction of the first recess 58 at the radially outer end. As a result, the groove width expansion portion 45a exists in an area in the circumferential direction at the axially outer end, which the area is substantially equal to the area in the circumferential direction of the first recess 58 at the radially outer end. The axially outer end of the groove width expansion portion 45a faces the radially outer end of the first recess 58 across the annular rib 57 in the radial direction.

The circumferentially second side edge of the first portion 35a includes a radially upper side edge shifting toward the second side in the circumferential direction as progress inward in the radial direction, and a radially lower side edge extending substantially inward in the radial direction. On the other hand, each second portion 35b has an edge on the circumferentially first side edge that includes a first portion shifting toward the second side in the circumferential direction as progress inward in the radial direction, a second portion connected to the first portion and extending inward in the radial direction, and a third portion connected to the second portion and shifting toward the second side in the circumferential direction as progress inward in the radial direction.

Each second portion 35b has an inclined wall portion 39a located on the outer side in the radial direction and decreasing in thickness as progress inward in the radial direction, and a base portion 39b that is connected to the inner edge in the radial direction of the inclined wall portion 39a and has a wall thickness substantially the same as the thickness of the inner edge in the radial direction of the inclined wall portion 39a.

Second recesses 59 are each defined by a first side in the circumferential direction of the first portion 35a, a second side in the circumferential direction of the second portion 35b, and an annular rib 57 extending in the circumferential direction, and each second recess 59 is a depression extending substantially in the radial direction. The depth of the depression on the first side in the circumferential direction decreases as progress inward in the radial direction. The length in the circumferential direction of the axially outer edge of the first side second lateral groove 43a is substantially the same as the length in the circumferential direction of the radially outer edge of the second recess 59. As a result, the axially outer edge of the first side second lateral groove 43a and the radially outer edge of the second recess 59 exist in substantially the same area in the circumferential direction. The axially outer edge of the first side second lateral groove 43a faces the radially outer edge of the second recess 59 across the annular rib 57, in the radial direction.

In the configuration of the shoulder blocks 50a and the side protectors 35, the respective first side first lateral grooves 42a extend in a direction inclined at an acute angle with respect to the axial direction. Therefore, when the tire 1 rotates, the foreign objects, such as mud, water, pebbles, that have entered the first side first lateral groove 42a moves outward in the radial direction, and smoothly moves outward in the axial direction through the groove width expansion portion 45a.

Here, the groove width of the groove width expansion portion 45a increases as progress outward in the axial direction, thereby promoting discharge, from the groove, of the foreign objects that have reached the groove width expansion portion 45a. Therefore, the soil removal performance of the tire 1 can be improved. Note that the groove width expansion portion 45a may be provided at any location in the first side first lateral groove 42a, and may be provided outside the ground contact end E1 in the axial direction. This allows the soil removal performance to be improved, and allows the ground contact area to be increased at the same time, thereby increasing the frictional force and increasing the braking performance. This makes it possible to obtain the remarkable effect of being able to achieve both good soil removal performance and good braking performance, which have been in a trade-off relationship with each other.

More specifically, the axially outer end of the groove width expansion portion 45a faces the radially outer end of the first recess 58, in the radial direction, allowing the air that has entered the first side first lateral groove 42a to smoothly flow inward in the radial direction via the first side first lateral groove 42a and the first recess 58. This makes it possible to increase the heat dissipation of the tire 1, allowing the tire 1 to be effectively cooled by the air flow and increase the durability against heat.

Furthermore, each first side second lateral groove 43a also extends in a direction inclined at an acute angle with respect to the axial direction. Therefore, when the tire 1 rotates, the foreign objects, such as mud, water, and pebbles, that have entered the first side second lateral groove 43a moves outward in the radial direction, and smoothly moves outward in the axial direction through the groove width expansion portion 46a.

Here, the groove width of the groove width expansion portion 46a increases as progress outward in the axial direction, thereby promoting discharge, from the groove, of the foreign objects that have reached the groove width expansion portion 46a. Therefore, the soil removal performance of the tire 1 can be improved. Note that the groove width expansion portion 46a may be provided at any location in the first side second lateral groove 43a, and may be provided outside the ground contact end E1 in the axial direction. Providing the groove width expansion portion 46a in this manner allows the soil removal performance to be improved, and the ground contact area to be increased at the same time, thereby increasing the frictional force and increasing the braking performance. This makes it possible to obtain the remarkable effect of being able to achieve both good soil removal performance and good braking performance, which have been in a trade-off relationship with each other.

Furthermore, each axially outer edge of the first side second lateral groove 43a faces the radially outer edge of the second recess 59, in the radial direction. This also allows the air that has entered the first side second lateral groove 43a to smoothly flow inward in the radial direction via the first side second lateral groove 43a and the second recess 59, and to flow inward in the radial direction through the location with a shallow depth of the second recess 59. Therefore, the flow of air that has entered the second recess 59 can also improve heat dissipation. This allows the tire 1 to be effectively cooled and the tire 1 can have high durability against heat. Furthermore, the second recess 59 is a depression surrounded by the circumference. Providing such a depression in the side protector 35 allows the traction to be increased when the vehicle runs on muddy ground, thereby increasing the driving force when the vehicle runs on rough roads.

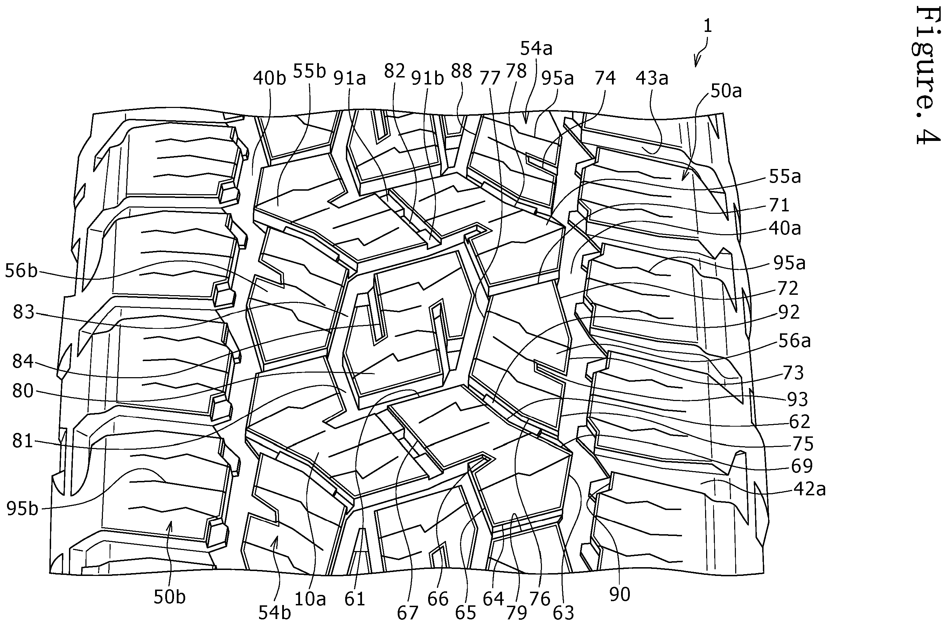

FIG. 4 is a partially enlarged front view of FIG. 2. As shown in FIG. 4, the tire 1 further includes a plurality of first side mediate blocks 54a defining the edge on the center side in the axial direction of the first main groove 40a, a plurality of second side mediate blocks 54b defining the edge on the center side in the axial direction of the second main groove 40b, and a plurality of center blocks 80. The plurality of first side mediate blocks 54a have a plurality of first mediate blocks 55a and a plurality of second mediate blocks 56a. The first mediate blocks 55a and the second mediate blocks 56a are arranged alternately in the circumferential direction.

Each first mediate block 55a has: a first edge 61 that shifts toward the first side in the circumferential direction as progress outward in the axial direction from the substantially center position in the axial direction of the tire 1; a second edge 62 that shifts toward the second side in the circumferential direction as progress outward in the axial direction from the axially outer end of the first edge 61; and a third edge 63 that slightly shifts inward in the axial direction as progress from the axially outer end of the second edge 62 toward the second side in the circumferential direction. Furthermore, the first mediate block 55a has a fourth edge 64 that shifts inward in the axial direction as progress from the circumferentially second side edge of the third edge 63 toward the second side in the circumferential direction; a fifth edge 65 that shifts toward the first side in the circumferential direction as progress inward in the axial direction from the axially inner end of the fourth edge 64; and a sixth edge 67, which is connected to the fifth edge 65 via a recess 66 provided thereon and extending substantially parallel to the fourth edge 64, shifts toward the first side in the circumferential direction as progress inward in the axial direction.

The first edge 61 and the second edge 62 intersect at an obtuse angle, the second edge 62 and third edge 63 also intersect at an obtuse angle, and the third edge 63 and fourth edge 64 also intersect at an obtuse angle. Furthermore, the fourth edge 64 and the fifth edge 65 intersect at an obtuse angle slightly larger than a right angle, and the sixth edge 67 and the first edge 61 intersect at an acute angle. Furthermore, in the recess 66 of the first mediate block 55a, the length of the circumferentially second side edge is smaller than the length of the circumferentially first side edge. As a result, the extension line of the fifth edge 65 intersects the center part of the circumferentially second side edge of the recess 66.

Each second mediate block 56a has a first edge 71, a second edge 72, and a third edge 73. The first edge 71 extends substantially parallel to the fourth edge 64 of the first mediate block 55a at an interval and has substantially the same length as the fourth edge 64. The second edge 72 shifts inward in the axial direction as progress from the axially outer end of the first edge 71 toward the second side in the circumferential direction thereof. The third edge 73 shifts inward in the axial direction as progress from the axially outer end of the second edge 72 toward the second side in the circumferential direction. Furthermore, the second mediate block 56a has a fourth edge 75, a fifth edge 76, and a sixth edge 77. The fourth edge 75 is connected to the end on the second side in the circumferential direction of third edge 73 via the recess 74, and shifts inward in the axial direction as progress toward the second side in the circumferential direction. The fifth edge 76 shifts toward the first side in the circumferential direction as progress inward in the in the axial direction from the end on the second side in the circumferential direction of the fourth edge 75, and extends substantially parallel to the second edge 62 of the first mediate block 55a at an interval. The sixth edge 77 shifts outward in the axial direction as progress from the axially inner end of the fifth edge 76 toward the second side in the circumferential direction. The recess 74 of the second mediate block 56a extends substantially parallel to the fifth edge 76.

The first edge 71 and the second edge 72 intersect at an obtuse angle, and the second edge 72 and third edge 73 also intersect at an obtuse angle. Furthermore, the fourth edge 75 is located substantially on an extension line of the third edge 73, and the fourth edge 75 and the fifth edge 76 intersect at an acute angle. Furthermore, the fifth edge 76 and the sixth edge 77 intersect at an obtuse angle, and the sixth edge 77 and the first edge 71 also intersect at an obtuse angle. The innermost point in the axial direction in the second mediate block 56a is an intersection 88 where the fifth edge 76 and the sixth edge 77 intersect. The position in the axial direction of the intersection 88 is substantially the same as the position in the axial direction of the center part of the circumferentially first side edge of the recess 66 of the first mediate block 55a. Most part of the first mediate block 55a that is on inner side in the axial direction relative to the center in the axial direction are located on the inner side in the axial direction relative to the second mediate block 56a.

The inner edge in the axial direction of the first main groove 40a is defined by: a protrusion 69 that is in the second edge 62 of the first mediate block 55a and protrudes outward in the axial direction from the fifth edge 76 of the second mediate block 56a; the third edge 63 of the first mediate block 55a; the second edge 72 of the second mediate block 56a; the third edge 73 of the second mediate block 56a; the fourth edge 75 of the second mediate block 56a; and the inner surface of recess 74 of second mediate block 56a.

The second edge 62 of the first mediate block 55a and the fifth edge 76 of the second mediate block 56a define a first side third lateral groove 78 that shifts toward the second side in the circumferential direction as progress in an axial direction. Furthermore, the fourth edge 75 of the first mediate block 55a and the first edge 71 of the second mediate block 56a define a first side fourth lateral groove 79 that shifts toward the first side in the circumferential direction as progress in the axial direction. Therefore, between the plurality of first side mediate blocks 54a arranged in a row at intervals in the circumferential direction, the following grooves alternately appear in the circumferential direction: the first side third lateral grooves 78 shifting toward the second side in the circumferential direction as progress in the axial direction; and the first side fourth lateral grooves 79 shifting toward the first side in the circumferential direction as progress in the axial direction. Configuring the first side third lateral grooves 78 and the first side fourth lateral grooves 79 in this way allows for obtaining a large propulsive force from a rough road when the vehicle runs on the rough road or when the vehicle is backed on the rough road.

The first side first lateral groove 42a exists on the extension line of the first side third lateral groove 78. Furthermore, the protrusion 69 extends toward the circumferentially second side edge of the first side first lateral groove 42a, and protrudes toward the circumferentially second side edge thereof, to move foreign objects or air that have entered the first side third lateral groove 78 to the first side first lateral groove 42a. As shown in FIG. 4, the sixth edge 67 of the first mediate block 55a in the first structure 4 is arranged so as to be spaced apart from and substantially parallel to the sixth edge 67 of the first mediate block 55b in the second structure 8. Furthermore, all of the sixth edges 67 in the first structure 4 respectively face all of the sixth edges 67 in the second structure 8 so as to positionally coincide with each other in a direction orthogonal to the direction in which the sixth edges 67 extend.

As a result, the four first mediate blocks 55a and the two second mediate blocks 56a define a substantially hexagonal space. More specifically, the fifth edges 65 of the two first mediate blocks 55a, the first edges 61 of the two first mediate blocks 55a, and the sixth edges 77 of the two second mediate blocks 56a defines a substantially hexagonal recess 81. Furthermore, the edge of each recess 66 in the sixth edge side of the first mediate block 55a in the first structure 4 and the first edge 61 of the first mediate block 55b in the second structure 8 are located on substantially the same straight line.

The tire 1 has a plurality of substantially hexagonal recesses 81 arranged at equal intervals in the circumferential direction. Each sixth edge 67 of the first structure 4 and the sixth edge 67 of the second structure 8 define a longitudinal groove 82. The substantially hexagonal recesses 81 adjacent to each other in the circumferential direction communicate with each other through the longitudinal groove 82. The center of each longitudinal grooves 82 in the extending direction passes through the center of the tire 1 in the axial direction. The longitudinal groove 82 shifts toward the second side in the axial direction as progress toward the first side in the circumferential direction.

The tire 1 further includes a plurality of center blocks 80. The respective center blocks 80 have six edges arranged so as to be spaced from and substantially parallel to the fifth edges 65 of the two first mediate blocks 55a, the first edges 61 of the two first mediate blocks 55a, and the sixth edges 77 of the two second mediate blocks 56a. **In** other words, the fifth edges 65 of the two first mediate blocks 55a, the first edges 61 of the two first mediate blocks 55a, the sixth edges 77 of the two second mediate blocks 56a, and the annular edge of the center block 80 defines a substantially hexagonal annular groove 83.

The respective center blocks 80 have one or more linear (elongated) recesses 84, and in this embodiment, it has two elongated recesses 84. The center block 80 having a plurality of linear (elongated) recesses 84 makes it hard for the vehicle to slide sideways when turning. Each recess 84 is a longitudinal groove, and shifts toward the center in the axial direction as progress toward the front end. At least part of the opening of the recess 84 faces the axially inner opening of the first side third lateral groove 78 in the extending direction of the recess 84, via part of the annular groove 83. Six grooves 78, 78, 79, 79, 82, 82 extend from the annular groove 83. Two of the lateral grooves 78 and 79 communicate between the annular groove 83 and the first main groove 40a in the first structure 4. Furthermore, the other two of the lateral grooves 78 and 79 communicate between the annular groove 83 and the second main groove 40b in the second structure 8. Furthermore, one of the longitudinal grooves 82 communicates between one annular groove 83 and another annular groove 83 existing on the first side in the circumferential direction of the one annular groove 83. Furthermore, the other one of the longitudinal grooves 82 communicates between the one annular groove 83 and another annular groove 83 existing on the second side in the circumferential direction of the one annular groove 83.

Part of the above configuration can be briefly summarized as follows. The tire 1 includes a plurality of center blocks 80 arranged at intervals in the circumferential direction and arranged between the first main groove 40a and the second main groove 40b in the axial direction. The respective center blocks 80 have one or more elongated recesses 84 shifting toward the center in the axial direction as progress toward the front end. The center block 80 has an annular groove 63 surrounding the entire circumference thereof. Two of center blocks 80 adjacent to each other in the circumferential direction have the center block communication groove 82 that communicates between the annular groove 83 surrounding one of the center blocks 80 and the annular groove 83 surrounding the other of the center blocks 80 and shift toward one side in the axial direction as progress toward one side in the circumferential direction. The tire 1 includes the first side third lateral grooves 78 that communicate between the annular grooves 83 and the first main groove 40a and shift toward one side in the circumferential direction as progress outward in the axial direction, and the first side fourth lateral grooves 79 that communicate between the annular grooves 83 and the first main groove 40a and shift toward the other side in the circumferential direction as progress outward in the axial direction. The first side third lateral grooves 78 and the first side fourth lateral grooves 90 appear alternately in the circumferential direction.

If only the lateral grooves 78 and 79 exist in the center in the axial direction, the vehicle may be likely to slip sideways when turning. In contrast, if the longitudinal grooves 82 and the recesses 84 that are longitudinal grooves exist at the center in the axial direction, as in the tire 1 of this embodiment, the edge effect of the longitudinal grooves 82 and the recesses 84 cause the vehicle to be unlikely to slip sideways when turning. Note that, in this embodiment, the main grooves 40a, 40b and each substantially hexagonal annular groove 83 communicate with each other via the two lateral grooves 78, 79. However, annular grooves each having a shape other than a hexagon may be used to communicate with the main groove through one or more lateral grooves.

As shown in FIG. 4, the axially inner edges of the plurality of shoulder blocks 50a define the axially outer edge of the first main groove 40a. The axially inner edge of each shoulder block 50a is recessed outward in the axial direction in opposite end parts in the circumferential direction. The depth of a depression 90 is shallower than the depth of the bottom of the first main groove 40a. Furthermore, in the center part in the circumferential direction of the axially outer edge of each second mediate block 56a, the elongated depression 93 is provided that shifts toward the first side in the circumferential direction as progress inward in the axial direction.

The tire 1 of the present embodiment of the invention has main grooves (circumferentially extending grooves) 40a, 40b including annular portions 41a, 41b unlike existing off-road tires, major grooves of which are lateral grooves, even though they are intended for off-road use. Therefore, the formation of the main grooves (circumferentially extending grooves) 40a, 40b, may reduce the grip received from the ground in driving on rough roads such as muddy roads.

However, the tire 1 is provided with elongated depressions 93 serving as lateral grooves each on the axially outer edge of the second mediate block 56a, and the many depressions 90, recessed in the axial direction, that can increase the grip are each provided on the axially inner edge of the shoulder block 50a. This allows increase of the grip received from the ground in driving on rough roads. Furthermore, making the depth of each depression 90 shallow allows increase in the rigidity of the tire 1 and improvement in the steering stability. Furthermore, the depressions 90 are provided in opposite end parts in the circumferential direction of the axially inner edge of each shoulder block 50a, thereby facilitating movement of foreign objects to the first side first lateral groove 42a and the first side second lateral groove 43a and allowing good soil removal performance. Furthermore, each longitudinal groove 82 has thick portions 91a, 91b with a shallow depth in the opposite end parts in the extending direction, and each first side third lateral groove 78 has a thick portion 92 with a shallow depth in the center part in the extending direction. Providing such thick portions 91a, 91b, and 92 allows increase in the rigidity of the tire 1 and improvement in steering stability.

As shown in FIG. 4, the edges of the first main groove 40a is defined by the plurality of shoulder blocks 50a and the plurality of first side mediate blocks 54a. All of the plurality of sipes 95a provided in each shoulder block 50a communicate with the first main groove 40a. Furthermore, all of the plurality of sipes 95a provided in each first side mediate block 54a also communicate with the first main groove 40a. **In** other words, while there are a plurality of sipes 95a communicating with the first main groove 40a, there are no sipes that are located away from the first main groove 40a with only the ground contact surface 10a in between.

Each sipe 95a includes a connecting portion that connects to the first main groove 40a, and a front-end-side portion that extends from the end of the connecting portion on the side opposite to the first main groove 40a to the front end. The connecting portion and the front-end-side portion have substantially the same depth. Furthermore, the depth of the connecting portion is shallower than the depth of the front-end-side portion. Note that all the sipes provided on the block that defines the edge of the main groove may communicate with the main groove, but a plurality of sipes provided on the block that defines the edge of the main groove may include one or more sipes that do not communicate with the main groove. Furthermore, the tire may have one or more sipes that are connected to the main groove and have substantially the same depth over the entire length.

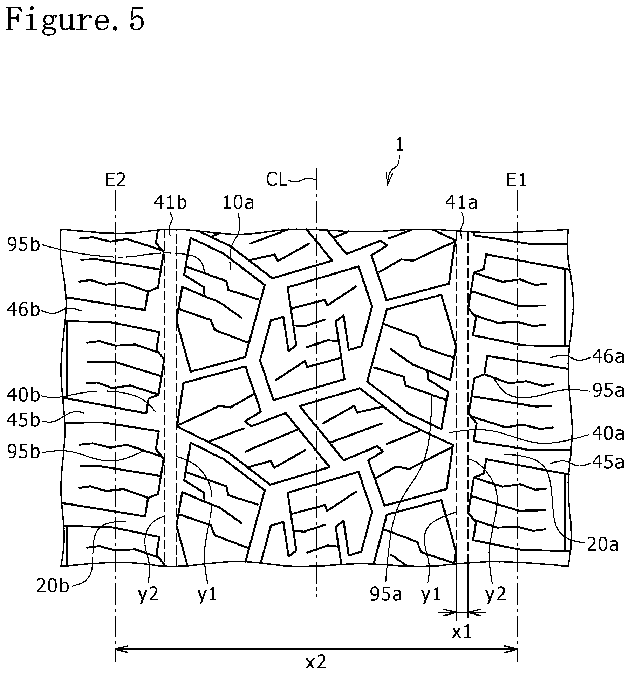

FIG. 5 is a schematic plan view in which part of the tire 1 in the circumferential direction is orthogonally projected onto a plane orthogonal to the radial direction of the tire 1. The following describes a particularly important configuration of the tire 1 of the present embodiment of the invention and the effects derived from the configuration, using FIG. 5.

The tire 1 includes: a first main groove 40a that is provided on the first side in the axial direction and includes a first annular portion 41a extending in parallel to the circumferential direction over the entire circumference in the circumferential direction; and a second main groove 40b that is provided on the second side in the axial direction and includes a second annular portion 41b extending in parallel to the circumferential direction over the entire circumference in the circumferential direction. Between the first main groove 40a and the second main groove 40b in the axial direction, there is no groove having an annular portion extending in parallel to the circumferential direction over the entire circumference in the circumferential direction.

Conventionally, tires intended for off-road use have had major grooves composed of lateral grooves to provide propulsive force in running on rough roads. However, such tires have difficulty in having good soil removal performance in running on rough roads (for example, muddy roads).

In this background, according to the tire 1 of the present embodiment of the invention, there is no groove, in the center part in the axial direction, that has an annular portion extending in parallel to the circumferential direction over the entire circumference in the circumferential direction. Therefore, the center part in the axial direction of the tire 1 can obtain a large propulsive force from a rough road such as a muddy road, and the tire 1 can be suitably used off-road. Furthermore, main grooves 40a, 40b having annular portions 41a, 41b are provided in the end parts in the axial direction of the tire 1. Therefore, foreign objects such as soil, mud, or water can be easily discharged efficiently through the main grooves 40a, 40b, and soil removal performance can be improved. This makes it possible to manufacture a tire 1 that exhibits a remarkable effect of being able to achieve both good braking performance and good soil removal performance, which have been in a trade-off relationship with each other.

Conventionally, there has not been a tire 1 that has a side protector 35, is capable of being suitably used off-road, and has excellent soil removal performance, which the tire 1 includes: a first main groove 40a that is provided on the first side in the axial direction and includes a first annular portion 41a extending in parallel to the circumferential direction over the entire circumference in the circumferential direction; and a second main groove 40b that is provided on the second side in the axial direction and includes a second annular portion 41b extending in parallel to the circumferential direction over the entire circumference in the circumferential direction. This is because the tire 1 that can be suitably used off-road must obtain a large propulsive force from rough roads such as muddy roads, but the tire 1 may not be able to obtain a large propulsive force while improving soil removal performance if the tire 1 includes: a first main groove 40a that includes a first annular portion 41a extending in parallel to the circumferential direction over the entire circumference in the circumferential direction; and a second main groove 40b that is provided on the second side in the axial direction and includes a second annular portion 41b extending in parallel to the circumferential direction over the entire circumference in the circumferential direction. However, the inventor of the present invention has discovered that, if there is no groove having an annular portion extending in parallel to the circumferential direction over the entire circumference in the circumferential direction between the first main groove 40a and the second main groove 40b in the axial direction, two effects can be achieved that have been mutually contradictory (in a trade-off relationship), that is, exceptional and remarkable effects that allow for obtaining both large propulsive force and good soil removal performance.

In addition, in FIG. 5, if the length X1 in the axial direction of each annular portion 41a, 41b surrounded by dotted line y1 and dotted line y2 is 3% or more of the length X2 in the axial direction between the ground contact end E1 on the first side in the axial direction and the ground contact end E2 on the second side in the axial direction, the main grooves 40a, 40b easily obtain good soil removal performance. Furthermore, when X1 is 20% or less of X2, good braking performance can be easily achieved.

Furthermore, the tire 1 may have a plurality of first lateral grooves 20a extending outward in the axial direction from the first main groove 40a and arranged at intervals in the circumferential direction, and a plurality of second lateral grooves 20b extending outward in the axial direction from the second main groove 40b and arranged at intervals in the circumferential direction. In addition, the respective first lateral grooves 20a may have first groove width expansion portions 45a, 46a where a groove width increases, and the respective second lateral grooves 20b may have second groove width expansion portions 45b, 46b where a groove width increases.

According to this configuration, the groove width expansion portions 45a, 46a, 45b, 46b allow effectively discharging the foreign objects, which have moved outward in the axial direction, in the first lateral groove 20a and the second lateral groove 20b due to the rotation of the tire 1. Therefore, the soil removal performance can be further improved.

Furthermore, the first groove width expansion portions 45a, 46a may be located on the outer side in the axial direction relative to the first ground contact end E1 located on the first side in the axial direction, and the second groove width expansion portions 45b, 46b may be located on the outer side in the axial direction relative to the second ground contact end E2 located on the second side in the axial direction.

According to this configuration, soil removal performance can be improved without reducing the ground contact area of the tire that contributes to braking performance. This allows manufacture of a tire 1 that is excellent in both braking performance and soil removal performance.

Note that a case has been described in which: the respective first side first lateral grooves 42a has an groove width expansion portion 45a in which the groove width increases as progress toward the outer side in the axial direction; and the respective first side second lateral grooves 43a have an first groove width expansion portion 46a in which the groove width increases as progress toward the outer side in the axial direction. Furthermore, a case has been described in which the first groove width expansion portions 45a, 46a are located on an outer side in the axial direction relative to the first ground contact end E1 located on the first side in the axial direction. However, at least one of the first side first lateral groove and the first side second lateral groove may include a first portion having a substantially constant groove width and a second portion extending outward in the axial direction from the first portion. In addition, the second portion may be connected to the first portion via a step, and the groove width of the second portion may be substantially constant and wider than the groove width of the first portion. **In** other words, at least one of the first side first lateral groove and the first side second lateral groove may include a part where the groove width widens at a specific location via a step, and the groove width expansion portion may locally exist at the specific location. Furthermore, the first groove width expansion portion located on the first side in the axial direction may include a part located on the inner side in the axial direction relative to the ground contact end on the first side in the axial direction. Alternatively, both the first side first lateral groove and the first side second lateral groove may include no groove width expansion portion where the groove width increases on the outer side in the axial direction.

Furthermore, as shown in FIG. 4, all of a plurality of sipes 95a provided in blocks 50a, 54a each defining the edge of the first main groove 40a may communicate with the first main groove 40a. Furthermore, all of the plurality of sipes 95b provided in the blocks 50b, 54b defining the edge of the second main groove 40b may communicate with the second main groove 40b. In other words, while a plurality of sipes 95a exist that communicates with the first main groove 40a, a sipe that is located away from the first main groove 40a with only the ground contact surface (tread surface) in between don't have to be present. Furthermore, while a plurality of sipes 95b exist that communicate with the second main groove 40b, a sipe that is located away from the second main groove 40b with only the ground contact surface in between don't have to be present.

According to this configuration, the rigidity of the ground contact surface 10a can be lowered, so that the force (input) acting on the tire 1 can be reduced. Therefore, chipping (micro defect) resistance can be improved. Note that chipping resistance depends on the gravity applied from the road surface and is affected by the shape of the ground contact surface, but it is preferable to have higher block rigidity in climbing on a rocky road surface. Therefore, each depth of the sipes 95a, 95b in the part on the side of the main grooves 40a, 40b can be made shallower than each depth of the sipes 95a, 95b on the front end side, to prevent the block rigidity from decreasing more than necessary.

## Claims

1. A pneumatic tire (1), comprising:
a first main groove (40a) that is provided on a first side in an axial direction and includes a first annular portion (41a) extending in a circumferential direction over an entire circumference in the circumferential direction; and
a second main groove (40b) that is provided on a second side in the axial direction and includes a second annular portion (41b) extending in the circumferential direction over an entire circumference in the circumferential direction,
wherein, between the first main groove (40a) and the second main groove (40b) in the axial direction, there is no groove having an annular portion extending in the circumferential direction over the entire circumference in the circumferential direction,
wherein the pneumatic tire further comprises
a plurality of center blocks (80) arranged at intervals in the circumferential direction and arranged between the first main groove (40a) and the second main groove (40b) in the axial direction, the center block (80) in plurality being arranged at intervals in the circumferential direction; annular grooves (83) each surrounding an entire circumference of the respective center blocks (80);
first side third lateral grooves (78) each communicating between the annular groove (83) and the first main groove (40a) and shifting toward one side in the circumferential direction as progress outward in the axial direction; and
first side fourth lateral grooves (79) each communicating between the annular groove (83) and the first main groove (40a) and shifting toward another side in the circumferential direction as progress outward in the axial direction,
wherein the first side third lateral grooves (78) and the first side fourth lateral grooves (79) appear alternately in the circumferential direction,
wherein two of the center blocks (80) adjacent to each other in the circumferential direction have a center block communication groove (82), the center block communication groove (82) communicating between an annular groove (83) surrounding one of the center blocks (80) and an annular groove (83) surrounding another of the center blocks (80), the center block communication groove(82) shifting toward one side in the axial direction as progress toward one side in the circumferential direction,
wherein each of the center blocks (80) has one or more elongated recesses (84) each having a closed front end and an opening facing an axially inner opening of the first side third lateral groove (78) in the extending direction of the recess (84), via part of the annular groove (83), and
wherein each of the elongated recesses (84) shifts toward a center in the axial direction as progress toward the front end,
**characterized in that**
each center block communication groove (82) has thick portions (91a, 91b) with a shallow depth in the opposite end parts in the extending direction and each first side third lateral groove (78) has a thick portion (92) with a shallow depth in the center part in the extending direction.

2. The pneumatic tire (1) according to claim 1, further comprising:
a plurality of first lateral grooves (20a) extending outward in the axial direction from the first main groove (40a) and arranged at intervals in the circumferential direction; and
a plurality of second lateral grooves (20b) extending outward in the axial direction from the second main groove (40b) and arranged at intervals in the circumferential direction,
wherein the respective first lateral grooves (20a) have first groove width expansion portions (45a, 46a) where a groove width increases, and the respective second lateral grooves (20b) have second groove width expansion portions (45b, 46b) where a groove width increases.

3. The pneumatic tire (1) according to claim 1 or 2, wherein
at least one sipe (95a), provided in a block (50a, 54a) defining an edge of the first main groove (40a), communicates with the first main groove (40a), and
at least one sipe (95b), provided in a block (50b, 54b) defining an edge of the second main groove (40b), communicates with the second main groove (40b).

4. The pneumatic tire (1) according to any one of claims 1 to 3, further comprising sidewalls (12) on both sides in the axial direction, the sidewalls (12) each including a maximum width position (12a) protruding most outward in the axial direction, the sidewalls (12) being made of an integral rubber composition,
wherein at least one of the sidewall (12) includes a side protector (35) upheaving outward in the axial direction.

5. The pneumatic tire (1) according to any one of claims 1 to 3, wherein
an outer edge in the axial direction of the first main groove (40a) is defined by at least one first side first shoulder block (51a) and at least one first side second shoulder block (52a),
the first side first shoulder block (51a) and the first side second shoulder block (52a) are arranged alternately in the circumferential direction,
the first side first shoulder block (51a) has a different structure from the first side second shoulder block (52a),
first lateral grooves (20a) are composed of a plurality of first side first lateral grooves (42a) and a plurality of first side second lateral grooves (43a),
the plurality of first side first lateral grooves (42a) and the plurality of first side second lateral grooves (43a) are arranged alternately in the circumferential direction, and
the respective first side first lateral grooves(42a) have a different structure from the respective first side second lateral grooves (43a).

6. The pneumatic tire (1) according to claim 5, wherein
the groove width expansion portion (45a) of the first side first lateral groove (42a) includes: an axially inner portion (48a) in which a maximum groove width expansion rate per unit length in the axial direction is a first groove width expansion rate; and an axially outer portion (49a), extending outward in the axial direction from the axially inner portion (48a), in which a minimum groove width expansion rate per unit length in the axial direction is a second groove width expansion rate that is larger than the first groove width expansion rate, and
the groove width expansion portion of the first side second lateral groove (43a) gradually increases in groove width as progress toward an outer end in the axial direction.

7. The pneumatic tire (1) according to claim 3, wherein all of the sipes (95a), provided in the block (50a,54a) defining the edge of the first main groove (40a), communicate with the first main groove (40a).

8. The pneumatic tire (1) according to claim 3, wherein all of the sipes (95b), provided in the block (50b,54b) defining the edge of the second main groove (40b), communicate with the second main groove (40b).

9. The pneumatic tire (1) according to claim 4, wherein the sidewalls (12) are made of one rubber composition.

## Patentansprüche

1. Luftreifen (1), umfassend:
eine erste Hauptrille (40a), die auf einer ersten Seite in einer axialen Richtung bereitgestellt ist und einen ersten ringförmigen Abschnitt (41a) einschließt, der sich in einer Umfangsrichtung über einen gesamten Umfang in der Umfangsrichtung erstreckt; und
eine zweite Hauptrille (40b), die auf einer zweiten Seite in der axialen Richtung bereitgestellt ist und einen zweiten ringförmigen Abschnitt (41b) einschließt, der sich in der Umfangsrichtung über einen gesamten Umfang in der Umfangsrichtung erstreckt,
wobei zwischen der ersten Hauptrille (40a) und der zweiten Hauptrille (40b) in der axialen Richtung keine Rille vorhanden ist, die einen ringförmigen Abschnitt aufweist, der sich in der Umfangsrichtung über den gesamten Umfang in der Umfangsrichtung erstreckt,
wobei der Luftreifen ferner umfasst
eine Vielzahl von Mittelblöcken (80), die in Abständen in der Umfangsrichtung angeordnet sind und zwischen der ersten Hauptrille (40a) und der zweiten Hauptrille (40b) in der axialen Richtung angeordnet sind, wobei der Mittelblock (80) in der Vielzahl in Abständen in der Umfangsrichtung angeordnet ist; ringförmige Rillen (83), die jeweils einen gesamten Umfang der jeweiligen Mittelblöcke (80) umgeben;
dritte Querrillen (78) der ersten Seite, die jeweils zwischen der ringförmigen Rille (83) und der ersten Hauptrille (40a) in Verbindung stehen und sich zu einer Seite in der Umfangsrichtung bei Fortschreiten nach außen in der axialen Richtung verschieben; und
vierte Querrillen (79) der ersten Seite, die jeweils zwischen der ringförmigen Rille (83) und der ersten Hauptrille (40a) in Verbindung stehen und sich zu einer anderen Seite in der Umfangsrichtung bei Fortschreiten nach außen in der axialen Richtung verschieben,
wobei die dritten Querrillen (78) der ersten Seite und die vierten Querrillen (79) der ersten Seite abwechselnd in der Umfangsrichtung vorkommen,
wobei zwei der in der Umfangsrichtung einander angrenzenden Mittelblöcke (80) eine Mittelblockverbindungsrille (82) aufweisen, wobei die Mittelblockverbindungsrille (82) zwischen einer ringförmigen Rille (83), die einen der Mittelblöcke (80) umgibt, und einer ringförmigen Rille (83), die einen anderen der Mittelblöcke (80) umgibt, in Verbindung steht, wobei sich die Mittelblockverbindungsrille (82) zu einer Seite in der axialen Richtung bei Fortschreiten zu einer Seite in der Umfangsrichtung verschiebt,
wobei jeder der Mittelblöcke (80) eine oder mehrere längliche Aussparungen (84) aufweist, die jeweils ein geschlossenes vorderes Ende und eine Öffnung, die einer axial inneren Öffnung der dritten Querrille (78) der ersten Seite in der Erstreckungsrichtung der Aussparung (84) über einen Teil der ringförmigen Rille (83) zugewandt ist, aufweisen, und
wobei sich jede der länglichen Aussparungen (84) zu einer Mitte in der axialen Richtung bei Fortschreiten zu dem vorderen Ende verschiebt,
**dadurch gekennzeichnet, dass**
jede Mittelblockverbindungsrille (82) dicke Abschnitte (91a, 91b) mit einer geringen Tiefe in den gegenüberliegenden Endteilen in der Erstreckungsrichtung aufweist, und jede dritte Querrille (78) der ersten Seite einen dicken Abschnitt (92) mit einer geringen Tiefe in dem Mittelteil in der Erstreckungsrichtung aufweist.

2. Luftreifen (1) nach Anspruch 1, ferner umfassend:
eine Vielzahl von ersten Querrillen (20a), die sich in der axialen Richtung von der ersten Hauptrille (40a) nach außen erstrecken und in Abständen in der Umfangsrichtung angeordnet sind; und
eine Vielzahl von zweiten Querrillen (20b), die sich in der axialen Richtung von der zweiten Hauptrille (40b) nach außen erstrecken und in Abständen in der Umfangsrichtung angeordnet sind,
wobei die jeweiligen ersten Querrillen (20a) erste Rillenbreitenerweiterungsabschnitte (45a, 46a) aufweisen, in denen eine Rillenbreite zunimmt, und die jeweiligen zweiten Querrillen (20b) zweite Rillenbreitenerweiterungsabschnitte (45b, 46b) aufweisen, in denen eine Rillenbreite zunimmt.

3. Luftreifen (1) nach Anspruch 1 oder 2, wobei
mindestens eine Lamelle (95a), die in einem Block (50a, 54a) bereitgestellt ist, der eine Kante der ersten Hauptrille (40a) definiert, mit der ersten Hauptrille (40a) in Verbindung steht, und
mindestens eine Lamelle (95b), die in einem Block (50b, 54b) bereitgestellt ist, der eine Kante der zweiten Hauptrille (40b) definiert, mit der zweiten Hauptrille (40b) in Verbindung steht.

4. Luftreifen (1) nach einem der Ansprüche 1 bis 3, ferner umfassend Seitenwände (12) auf beiden Seiten in der axialen Richtung, wobei die Seitenwände (12) jeweils eine Position (12a) maximaler Breite, die in der axialen Richtung am weitesten nach außen vorsteht, einschließen, wobei die Seitenwände (12) aus einer integralen Kautschukzusammensetzung hergestellt sind,
wobei mindestens eine der Seitenwände (12) einen Seitenschutz (35), der sich in der axialen Richtung nach außen erhebt, einschließt.

5. Luftreifen (1) nach einem der Ansprüche 1 bis 3, wobei
eine äußere Kante in der axialen Richtung der ersten Hauptrille (40a) durch mindestens einen ersten Schulterblock (51a) der ersten Seite und mindestens einen zweiten Schulterblock (52a) der ersten Seite definiert ist,
der erste Schulterblock (51a) der ersten Seite und der zweite Schulterblock (52a) der ersten Seite abwechselnd in der Umfangsrichtung angeordnet sind,
der erste Schulterblock (51a) der ersten Seite eine von dem zweiten Schulterblock (52a) der ersten Seite unterschiedliche Struktur aufweist,
erste Querrillen (20a) aus einer Vielzahl von ersten Querrillen (42a) der ersten Seite und einer Vielzahl von zweiten Querrillen (43a) der ersten Seite bestehen,
die Vielzahl von ersten Querrillen (42a) der ersten Seite und die Vielzahl von zweiten Querrillen (43a) der ersten Seite abwechselnd in der Umfangsrichtung angeordnet sind, und
die jeweiligen ersten Querrillen (42a) der ersten Seite eine von den jeweiligen zweiten Querrillen (43a) der ersten Seite unterschiedliche Struktur aufweisen.

6. Luftreifen (1) nach Anspruch 5, wobei
der Rillenbreitenerweiterungsabschnitt (45a) der ersten Querrille (42a) der ersten Seite einschließt: einen axial inneren Abschnitt (48a), in dem eine maximale Rillenbreitenerweiterungsrate pro Längeneinheit in der axialen Richtung eine erste Rillenbreitenerweiterungsrate ist; und einen axial äußeren Abschnitt (49a), der sich in der axialen Richtung von dem axial inneren Abschnitt (48a) nach außen erstreckt, in dem eine minimale Rillenbreitenerweiterungsrate pro Längeneinheit in der axialen Richtung eine zweite Rillenbreitenerweiterungsrate ist, die größer als die erste Rillenbreitenerweiterungsrate ist, und
der Rillenbreitenerweiterungsabschnitt der zweiten Querrille (43a) der ersten Seite bei Fortschreiten zu einem äußeren Ende in der axialen Richtung in der Rillenbreite allmählich zunimmt.

7. Luftreifen (1) nach Anspruch 3, wobei alle der Lamellen (95a), die in dem Block (50a, 54a) bereitgestellt sind, der die Kante der ersten Hauptrille (40a) definiert, mit der ersten Hauptrille (40a) in Verbindung stehen.

8. Luftreifen (1) nach Anspruch 3, wobei alle der Lamellen (95b), die in dem Block (50b, 54b) bereitgestellt sind, der die Kante der zweiten Hauptrille (40b) definiert, mit der zweiten Hauptrille (40b) in Verbindung stehen.

9. Luftreifen (1) nach Anspruch 4, wobei die Seitenwände (12) aus einer Kautschukzusammensetzung hergestellt sind.

## Revendications

1. Pneu pneumatique (1), comprenant :
une première rainure principale (40a) qui est prévue sur un premier côté dans une direction axiale et comporte une première partie annulaire (41a) s'étendant dans une direction circonférentielle sur une circonférence entière dans la direction circonférentielle ; et
une seconde rainure principale (40b) qui est prévue sur un second côté dans la direction axiale et comporte une seconde partie annulaire (41b) s'étendant dans la direction circonférentielle sur une circonférence entière dans la direction circonférentielle,
dans lequel, entre la première rainure principale (40a) et la seconde rainure principale (40b) dans la direction axiale, il n'y a pas de rainure ayant une partie annulaire s'étendant dans la direction circonférentielle sur la circonférence entière dans la direction circonférentielle,
dans lequel le pneu pneumatique comprend en outre
une pluralité de blocs centraux (80) disposés à intervalles dans la direction circonférentielle et disposés entre la première rainure principale (40a) et la seconde rainure principale (40b) dans la direction axiale, le bloc central (80) dans la pluralité étant disposé à intervalles dans la direction circonférentielle ; des rainures annulaires (83) entourant chacune une circonférence entière des blocs centraux (80) respectifs ;
des troisièmes rainures latérales de premier côté (78) communiquant chacune entre la rainure annulaire (83) et la première rainure principale (40a) et se déplaçant vers un côté dans la direction circonférentielle à mesure que l'avancement vers l'extérieur dans la direction axiale ; et
des quatrièmes rainures latérales de premier côté (79) communiquant chacune entre la rainure annulaire (83) et la première rainure principale (40a) et se déplaçant vers l'autre côté dans la direction circonférentielle à mesure que l'avancement vers l'extérieur dans la direction axiale,
dans lequel les troisièmes rainures latérales de premier côté (78) et les quatrièmes rainures latérales de premier côté (79) apparaissent en alternance dans la direction circonférentielle,
dans lequel deux des blocs centraux (80) adjacents l'un à l'autre dans la direction circonférentielle ont une rainure de communication de bloc central (82), la rainure de communication de bloc central (82) communiquant entre une rainure annulaire (83) entourant l'un des blocs centraux (80) et une rainure annulaire (83) entourant l'autre des blocs centraux (80), la rainure de communication de bloc central (82) se déplaçant vers un côté dans la direction axiale à mesure que l'avancement vers un côté dans la direction circonférentielle,
dans lequel chacun des blocs centraux (80) a un ou plusieurs évidements allongés (84) ayant chacun une extrémité avant fermée et une ouverture faisant face à une ouverture axialement interne de la troisième rainure latérale de premier côté (78) dans la direction d'extension de l'évidement (84), par l'intermédiaire d'une partie de la rainure annulaire (83), et
dans lequel chacun des évidements allongés (84) se déplace vers un centre dans la direction axiale à mesure que l'avancement vers l'extrémité avant,
**caractérisé en ce que**
chaque rainure de communication de bloc central (82) a des parties épaisses (91a, 91b) ayant une faible profondeur dans les parties d'extrémité opposées dans la direction d'extension et chaque troisième rainure latérale de premier côté (78) a une partie épaisse (92) ayant une faible profondeur dans la partie centrale dans la direction d'extension.

2. Pneu pneumatique (1) selon la revendication 1, comprenant en outre :
une pluralité de premières rainures latérales (20a) s'étendant vers l'extérieur dans la direction axiale à partir de la première rainure principale (40a) et disposées à intervalles dans la direction circonférentielle ; et
une pluralité de deuxièmes rainures latérales (20b) s'étendant vers l'extérieur dans la direction axiale à partir de la seconde rainure principale (40b) et disposées à intervalles dans la direction circonférentielle,
dans lequel les premières rainures latérales (20a) respectives ont des premières parties d'élargissement de largeur de rainure (45a, 46a) où une largeur de rainure augmente, et les deuxièmes rainures latérales (20b) respectives ont des secondes parties d'élargissement de largeur de rainure (45b, 46b) où une largeur de rainure augmente.

3. Pneu pneumatique (1) selon la revendication 1 ou 2, dans lequel
au moins une lamelle (95a), prévue dans un bloc (50a, 54a) définissant un bord de la première rainure principale (40a), communique avec la première rainure principale (40a), et
au moins une lamelle (95b), prévue dans un bloc (50b, 54b) définissant un bord de la seconde rainure principale (40b), communique avec la seconde rainure principale (40b).

4. Pneu pneumatique (1) selon l'une quelconque des revendications 1 à 3, comprenant en outre des flancs (12) des deux côtés dans la direction axiale, les flancs (12) comportant chacune une position de largeur maximale (12a) faisant le plus saillie vers l'extérieur dans la direction axiale, les flancs (12) étant faits d'une composition de caoutchouc intégrale,
dans lequel au moins l'un du flanc (12) comporte une protection latérale (35) se soulevant vers l'extérieur dans la direction axiale.

5. Pneu pneumatique (1) selon l'une quelconque des revendications 1 à 3, dans lequel
un bord externe dans la direction axiale de la première rainure principale (40a) est défini par au moins un premier pavé d'épaulement de premier côté (51a) et au moins un second pavé d'épaulement de premier côté (52a),
le premier pavé d'épaulement de premier côté (51a) et le second pavé d'épaulement de premier côté (52a) sont disposés en alternance dans la direction circonférentielle,
le premier pavé d'épaulement de premier côté (51a) a une structure différente du second pavé d'épaulement de premier côté (52a),
des premières rainures latérales (20a) sont composées d'une pluralité de premières rainures latérales de premier côté (42a) et d'une pluralité de deuxièmes rainures latérales de premier côté (43a),
la pluralité de premières rainures latérales de premier côté (42a) et la pluralité de deuxièmes rainures latérales de premier côté (43a) sont disposées en alternance dans la direction circonférentielle, et
les premières rainures latérales de premier côté (42a) respectives ont une structure différente des secondes rainures latérales de premier côté (43a) respectives.

6. Pneu pneumatique (1) selon la revendication 5, dans lequel
la partie d'élargissement de largeur de rainure (45a) de la première rainure latérale de premier côté (42a) comporte : une partie axialement interne (48a) dans laquelle un taux d'élargissement de largeur de rainure maximal par longueur unitaire dans la direction axiale est un premier taux d'élargissement de largeur de rainure ; et une partie axialement externe (49a), s'étendant vers l'extérieur dans la direction axiale à partir de la partie axialement interne (48a), dans laquelle un taux d'élargissement de largeur de rainure minimal par longueur unitaire dans la direction axiale est un second taux d'élargissement de largeur de rainure qui est supérieur au premier taux d'élargissement de largeur de rainure, et
la partie d'élargissement de largeur de rainure de la deuxième rainure latérale du premier côté (43a) augmente progressivement en largeur de rainure à mesure que l'avancement vers une extrémité externe dans la direction axiale.

7. Pneu pneumatique (1) selon la revendication 3, dans lequel toutes les lamelles (95a), prévues dans le bloc (50a, 54a) définissant le bord de la première rainure principale (40a), communiquent avec la première rainure principale (40a).

8. Pneu pneumatique (1) selon la revendication 3, dans lequel toutes les lamelles (95b), prévues dans le bloc (50b, 54b) définissant le bord de la seconde rainure principale (40b), communiquent avec la seconde rainure principale (40b).

9. Pneu pneumatique (1) selon la revendication 4, dans lequel les flancs (12) sont faits d'une seule composition de caoutchouc.
